# EUROPEAN PATENT APPLICATION

(11) **EP 4 625 774 A1**
(43) Date of publication of application: **01.10.2025**
(21) Application number: 24166338.4
(22) Date of filing: 26.03.2024
(51) Int. Cl.: H02K 5/16, H02K 9/19, H02K 1/32

(54) **A COOLING MEDIUM COLLECTOR DEVICE**

(71) Applicant: Polestar Performance AB, 405 31 Gothenburg (SE)
(72) Inventor: ÅBERG, Magnus, 461 91 Trollhättan (SE)
(74) Representative: Zacco Sweden AB

(57) **Abstract**

The present disclosure relates to a cooling medium collector device (1) for a rotor of an electric motor. The device (1) comprising an annular main body (2) extending along an axial axis (a1), the main body (2) having an inner circumferential surface (2a) arranged to be associated with an end part of a rotor. Further, the inner circumferential surface (2a) comprises a plurality of circularly distributed receiving apertures (3) arranged to receive cooling medium ejected from said rotor. Furthermore, each of said plurality of receiving apertures (3) are in fluid flow communication with a looped portion (4) of said cooling medium collector device (1), the looped portion (4), the looped portion (4) comprises an outlet opening (4a) for releasing said ejected cooling medium.

## Description

### TECHNICAL FIELD

The present disclosure relates to a cooling medium collector device, a rotor comprising a cooling medium collector device and an electric motor comprising a cooling medium collector device.

### BACKGROUND

In an electric vehicle (EV) the rotor is part of the electric motor that converts electrical energy into mechanical energy to drive the EV. Cooling the rotor is vital to maintain a sufficient operating temperatures of the rotor. Some EVs utilize cooling medium that is circulated to flow through the rotor, with the purpose of absorbing heat away from the rotor and thereby cooling it.

One type of cooling is performed by enabling the rotor shaft to have a flow of cooling medium circulated through its interior. Accordingly, the cooling medium can flow through the interior of the rotor shaft to absorb heat therefrom. Subsequently, the cooling medium is ejected away from the rotor shaft. A common disadvantage of such solutions is that foaming issues of the cooling medium can occur (especially if oil is the cooling medium) as the cooling medium exits the rotor shaft with high speed arising from the rotation of the rotor. Additionally, the high speed cooling medium can also create heat, noise and vibration when hitting internal structures of the electric motor. Furthermore, the high speed cooling medium may enter the air gap of the electric motor. These issues generally lead to a less efficient electric motor.

Therefore, even though cooling of rotors utilized in the present art may work well in some situations. There is a need for a device that is able to prevent the cooling medium used to cool the rotor from adversely affecting the efficiency of the electric motor as it exits the rotor at a high speed.

### SUMMARY

It is therefore an object of the present disclosure to alleviate at least some of the mentioned drawbacks by providing a cooling medium collector device, a rotor comprising such a cooling medium collector device, and an electric motor comprising such a cooling medium collector device. The present disclosure is at least partly based on the insight that a cooling medium collector device having a looped portion is able to mitigate or at least reduce the risk of the cooling medium adversely affecting the electric motor. Thereby, increased energy efficiency of the electric motor is achieved.

The present disclosure relates to a cooling medium collector device for a rotor of an electric motor comprising an annular main body extending along an axial axis, the main body having an inner circumferential surface arranged to be associated with an end part/portion or end face of a rotor. The inner circumferential surface comprises a plurality of circularly distributed receiving apertures arranged to receive cooling medium ejected from said rotor. Each of said plurality of receiving apertures is in fluid flow communication with a looped portion of said cooling medium collector device, the looped portion being arranged to receive said ejected cooling medium via said plurality of receiving apertures. The looped portion comprises an outlet opening for releasing said ejected cooling medium, preferably to a reservoir or a sump.

The looped portion may form a looped trajectory encircling the axial axis. The looped trajectory being dimensioned and/or shaped to circulate cooling medium received from said apertures to slow down the speed of the cooling medium. Cooling medium may be oil.

An advantage of the cooling medium collector device is that it efficiently catches up cooling medium being ejected from the rotor end part and slows down the cooling medium prior to releasing it. This prevents the cooling medium from being foamed and from hitting internal structures of the electric motor. Further, it prevents the cooling medium from entering an air gap of the electric motor. Generally, the cooling medium collector device herein provides a more energy efficient electric motor when connected to one.

Each receiving aperture may be defined by a louver/slat formed in said inner circumferential surface. The louvers may each be formed by stamping the inner circumferential surface, thereby displacing a part thereof to form a louver that defines an aperture.

Each louver is angled relative to the inner circumferential surface, .e.g., by 10-60 degrees.

Further, each louver may be oriented to conform with a pre-determined flow route of said cooling medium. The predetermined flow route may be a circular flow route encircling said axial axis of the main body. The pre-determined flow route may be dependent on a rotation direction and/or rotation speed (RPM) of the rotor. Accordingly, the cooling medium collector device may be optimized/dimensioned/particularly configured for a specific rotation direction of the rotor (e.g. clockwise/anti-clockwise) such as the rotation direction which enables a vehicle comprising the rotor to travel forward. Each louver may conform by having an orientation that facilitates fluid to enter the aperture through a top surface of the louver.

The louvers may be distributed about a circular perimeter which encircles the axial axis. Each louver may have a length extension, wherein the length extensions of the plurality of louvre correspond encircle the said circular perimeter.

The louvers advantageously guide the cooling medium to the looped portion (via the apertures) in a smooth manner compared to e.g. having regular openings.

Each louver may protrude into the looped portion. Preferably, the louver is formed/protruding towards the looped portion.. Each louver may be flat or curved. Each louver may direct the cooling medium into the looped portion.

The cooling medium collector device may be arranged to be attached to, or be integral with a static portion of said electric motor, the static portion preferably being an electric motor housing. Accordingly, the cooling medium collector device is then static relative to the rotor so that upon rotation of the rotor the cooling medium collector device is static.

The inner circumferential surface may comprise a first circular portion arranged to overlap or be adjacent to an outer circumference of said rotor, the first circular portion extending to a second circular portion comprising said receiving apertures. The second circular portion is associated with an inner periphery of said inner circumferential surface and said first circular portion is associated with an outer periphery of said inner circumferential surface.

The inner circumferential surface may form a bowl/concave shape or the like (with a center opening for accommodating a rotor shaft of the rotor), thereby smoothly capture any cooling medium. The inner circumferential surface may be an integral part of the main body or an attachable part assembled to the main body. Nonetheless, the cooling medium collector device may be formed as a one-piece part/integrally formed.

The first circular portion may be tapered in its extension towards said outer periphery of said inner circumferential surface. The first circular portion may be tapered to narrow the opening towards the rotor, for example, the outer periphery of the inner circumferential surface may have a smaller diameter than the annular main body. Advantageously, this reduces the risk of any cooling medium entering the air gap of the electric motor i.e. the space formed between the rotor and the stator.

The looped portion may be dimensioned to transfer said cooling medium along at least a semi-circular path, said semi-circular path being arranged to at least partially encircle a rotor shaft of said rotor. In some aspects, the looped portion may comprise an inner guiding surface to transfer/guide the cooling medium along a helical path. The semi-circular path may form an (arc) angle of at least 300 degrees, preferably at least 315 degrees, most preferably at least 330 degrees.

Thereby, the looped portion helps to guide the cooling medium and further reduces the speed of the cooling medium within the looped portion.

The outlet opening may be in vicinity of a reservoir arranged to receive said cooling medium for re-using said cooling medium. The reservoir may be connected to or integral with a pump which is arranged to circulate the cooling medium. Hence, the outlet opening may be connected to a pump inlet which leads the cooling medium to a pump reservoir. Advantageously, the cooling medium collector device may prevent unnecessary oil loss and improve the reuse of the cooling medium.

A main body opening of said annular main body is arranged to accommodate a rotor shaft of the rotor. Accordingly, the rotor shaft and the main body opening may be coaxially arranged. The main body opening may be defined by the inner periphery of said inner circumferential surface. Optionally, the annular main body, the inner periphery of said inner circumferential surface may be coaxially arranged. Preferably, the main body opening has an opening size similar/substantially fit to the accommodated portion of the rotor shaft, which improves the cooling medium collecting through the apertures.

The plurality of receiving apertures may be at least five receiving apertures, or at least 8 receiving apertures, wherein the plurality of receiving apertures are distributed about said inner circumferential surface, preferably evenly distributed. The receiving apertures may be less than 20 receiving apertures.

By having at least five apertures, the flow of cooling medium can reach the looped portion from different entering points/portions. Thereby, more efficiently/smoothly guiding the cooling medium into the looped portion.

The present disclosure further relates to a rotor for an electric motor, the rotor comprising the cooling medium collector device according to any aspect herein, wherein the cooling medium collector device is associated with an end part of said rotor. The cooling medium collector device may be positioned in connection/relative to the end part of said rotor to gather cooling medium being ejected from an interior of a rotor shaft of the rotor. The cooling medium collector device may comprise a portion which overlaps the rotor axially so to surround a part of the rotor.

Accordingly, the rotor may comprise a hollow rotor shaft which is arranged to eject cooling medium via an interior of said hollow rotor shaft during an active state of said hollow rotor shaft. Preferably, the inner circumferential surface may be dimensioned to circulate said cooling medium at least one turn (preferably more) about said rotor shaft prior to that said ejected cooling medium being transferred to/reaching the looped portion (provided that the rotor rotates with a minimum speed). The active state of the rotor may be a state in which the rotor rotates with at least a specific minimum speed (rotation per minute, RPM) such as at least 300 rpm or at least 500 rpm, or at least 5000 rpm. Accordingly, the first circular portion of the inner circumferential surface may have a depth (along the axial axis). Further, the rotor shaft may comprise outlet openings for (radially) ejecting said cooling medium out from said rotor shaft. The first circular portion may be positioned to encircle the rotor shaft so to intersect with an extension of a center axis of each outlet opening.

The cooling medium may be ejected into the rotor shaft from a cooling medium ejecting device comprising a pump, an ejection nozzle, a reservoir and any other suitable component as appreciated by a skilled person in the art.

It should be noted that even though the rotor comprises the cooling medium collector device, the cooling medium collector device may be static relative to the rotor such that while the rotor rotates, the cooling medium collector device is static/stationary.

The present disclosure further relates to an electric motor for an electric vehicle, the electric motor comprising a stator and the rotor according to any aspect herein, wherein the stator accommodates the rotor. The electric motor may further comprise an electric motor housing which the cooling medium collector device is connected to or integral with.

### BRIEF DESCRIPTION OF THE DRAWINGS

These and other features and advantages of the present disclosure will now be further clarified and described in more detail, with reference to the appended drawings;
- Figure 1: illustrates an objective view of a cooling medium collector device in accordance with some aspects of the present disclosure;
- Figure 2: illustrates an exploded view of a rotor and a cooling medium collector device in accordance with some aspects of the present disclosure;
- Figure 3: illustrates a side view of a rotor in accordance with some aspects of the present disclosure;
- Figure 4A: illustrates a top objective view of a cooling medium collector device;
- Figure 4B: illustrates a top cross-section of the cooling medium collector device of Figure 4A; and
- Figure 5: schematically illustrates an electric vehicle.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV. Further, the term "electric vehicle" may refer to a plug-in hybrid vehicle, also referred to as a PHEV. Further, the term "electric vehicle" may refer to a hybrid vehicle, also referred to as a HEV, where a hybrid vehicle refers to a vehicle utilizing multiple propulsion sources one of which is an electric drive system.

The term "radially" may refer to a direction perpendicularly outward from a central point or axial axis, specifically a central axis of a circular structure. For instance, if a line is drawn from a center of a circle to its circumference or from its circumference outwards, those lines may be considered as extending radially.

The term "axially" may refer to a direction along or parallel to an axial axis or central line. Specifically, parallel to or along a central line or axis of a circular structure.

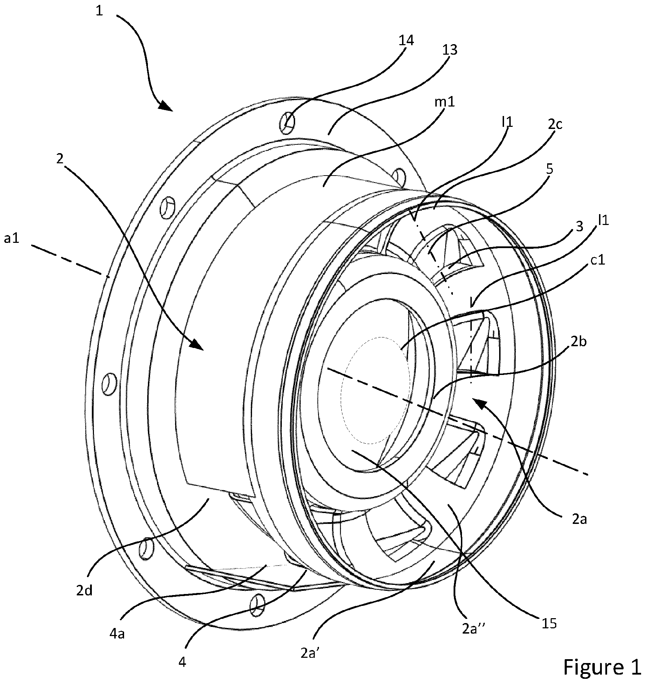

Figure 1 illustrates an objective view of a cooling medium collector device 1 (also referred to as "the device") for a rotor of an electric motor. The device 1 comprising an annular main body 2 extending along an axial axis a1. The main body 2 having an inner circumferential surface 2a arranged to be associated with an end part of a rotor.

Figure 1 illustrates that the inner circumferential surface 2a comprises a plurality of circularly distributed receiving apertures 3 arranged to receive cooling medium ejected from said rotor. The receiving apertures 3 are in Figure 1 distributed to encircle the axial axis a1. Each of said plurality of receiving apertures 3 are in fluid flow communication with a looped portion 4 of said cooling medium collector device 1, the looped portion 4 being arranged to receive said ejected cooling medium via said plurality of receiving apertures 3. Accordingly, any cooling medium entering the receiving apertures 3 will be led to the looped portion 4. The looped portion 4 may be situated opposite the inner circumferential surface 2a. Accordingly, the inner circumferential surface 2a may form a part of the looped portion 4. Figure 1 further illustrates that the looped portion 4 comprises an outlet opening 4a for releasing said ejected cooling medium.

Specifically, as illustrated in Figure 1, the looped portion 4 may comprise a first surface (not denoted) being opposite said inner circumferential surface 2a (i.e. a back side of the inner circumferential surface 2a), a second surface 2d (which faces the opposite side of said inner circumferential surface 2a) axially displaced relative to said inner circumferential surface 2a and a mating wall m1 which adjoins/connects the inner circumferential surface 2a and the second surface 2d. In Figure 1, the opening 4a of the looped portion is an opening in said mating wall m1. Figure 1 illustrates that the mating wall m1 extends along the axial axis a1.

Figure 1 further illustrates that each receiving aperture 3 may be defined by a louver 5 formed in said inner circumferential surface 2a. Figure 1 further illustrates that each louver 5 is angled relative to the circumferential surface 2a and/or a reference circle c1 coaxial with said main body 2. Figure 1 illustrates that each louver protrudes into the looped portion 4. The looped portion 4 in Figure 1 is a common looped portion 4 forming a common/connected space in fluid flow communication with each louver 5. Accordingly, the cooling medium may, after passing through any aperture 3, be collected into a common space defined by said looped portion 4.

The louvers 5 in Figure 1 have a joint configuration. Accordingly, each louver 5 in Figure 1 is oriented to enable the apertures 3 to conform with a pre-determined flow route/direction of said cooling medium. Specifically, each louver 5 in Figure 1 comprises a length extension axis l1, wherein the length extension l1 of adjacent louvers are angled relative each other, wherein the length extensions l1 jointly form a substantial circular path encircling the axial axis a1. Each louver 5 may be configured relative to the rotation direction of the rotor so to function as a fluid slide arranged to receive a flow of cooling medium prior to that the cooling medium reaches the looped portion 4.

The device 1 of Figure 1 may be attached to, or be integral with a static portion of said electric motor, the static portion preferably being an electric motor housing. Accordingly, the device 1 may, as in Figure 1, comprise a radially protruding lip 13 or any other suitable means with attachment means 14 for enabling the device 1 to be fastened to the electric motor housing (not shown) or any other stationary portion of an electric vehicle or electric motor. In Figure 1, the attachment means 14 are openings arranged to receive fastening means. However, the attachment means 14 may be any other suitable type of attachment means.

As illustrated in Figure 1, the device 1 may comprise an annular main body 2. The main body 2 may comprise a main body opening 15 arranged to accommodate/encircle (but not be in contact with) a rotor shaft of the rotor to enable the rotor end-face to be closer to the inner circumferential portion 2a of the device 1. In other aspects, the device 1 may contact the rotor 100 via a bearing arrangement or the like so to maintain a fixed position relative the rotor.

Such a configuration may enable minimized space between the device 1 and the rotor, preventing leakage of any cooling medium.

Figure 1 further illustrates that the plurality of receiving apertures 3 may be more than five receiving apertures, wherein the plurality of receiving apertures 3 are distributed about said inner circumferential surface 2a. In Figure 1, they are evenly distributed along a perimeter outer of the inner periphery 2b.

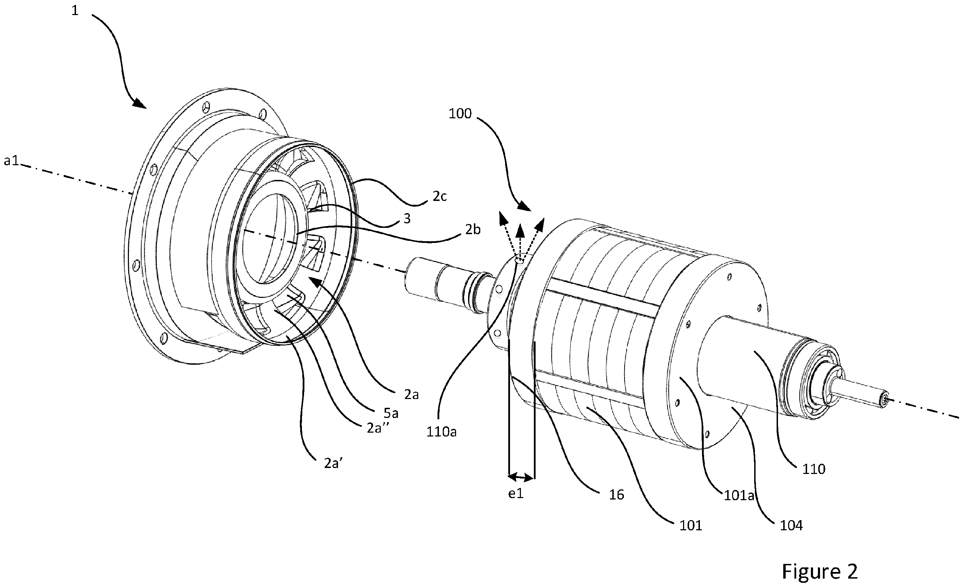

Figure 2 illustrates an objective exploded view of a rotor 100 and a device 1. Figure 2 illustrates that the circumferential surface 2a of the device 1 may comprise a first circular portion 2a' which may be arranged to overlap a part of an outer circumference 101 of said rotor (along the axial axis a1), the first circular portion 2a' extending as a tapered gradient (radially inwards and axially) to a second circular portion 2a". The second circular portion 2a" comprises said receiving apertures 3, the second circular portion 2a" being associated with an inner periphery/edge 2b of said inner circumferential surface 2a and said first circular portion 2a' being associated with an outer periphery/edge 2c of said inner circumferential surface 2a. The outer periphery 2c having a greater diameter than the inner periphery 2b. The outer periphery 2c being axially displaced relative to the inner periphery 2b so that the inner circumferential surface comprises a curved surface connecting the inner periphery and the outer periphery 2b, 2c. Further, the first circular portion 2a' may have a depth which may be dimensioned to allow cooling medium to circulate therein prior to reaching the second circular portion 2a'.

Figure 2 further illustrates that the cooling medium collector device 1 may be associated with an end part e1 of said rotor 100, specifically an outer edge 16 of said rotor 100. The outer periphery 2c preferably have a greater radius than the rotor core 101a. The rotor 100 of Figure 2 may be an electrically excited rotor which comprises a winding arrangement arranged to receive DC power from a power source. However, in other aspects, the rotor 100 may comprise permanent magnets. The winding arrangement may be formed by copper or any other suitable conductor. The winding arrangement may be wound about an outer circumference 101 of the rotor 100. Accordingly, the rotor 100 of Figure 2 comprise a pair of end-plates 104 enclosing opposite end-faces of the rotor 100. Thereby, the winding arrangement is not visible in Figure 2.

Figure 2 further illustrates that the rotor 100 comprises a hollow rotor shaft 110 which is arranged to circulate cooling medium therein (i.e. within its interior) and output cooling medium from outlet openings 110a as indicated by the dashed arrows in Figure 2. The cooling medium is then ejected from said rotor 100 via an interior of said hollow rotor shaft 110 during at least an active state of said hollow rotor shaft 110, wherein the inner circumferential surface 2a is dimensioned e.g. along axial axis a1, to circulate said cooling medium at least one turn about said rotor shaft 110 (i.e. around the axial axis a1) prior to that said ejected cooling medium is transferred to the looped portion. The device 1 may be positioned relative the rotor 100 such that a center axis extension of each outlet opening 110a intersects with the device 1. Specifically, intersecting with and/or being enclosed by the inner circumferential surface 2a of the device.

So, to exemplify an aspect of a cooling operation of the disclosure herein. The rotor shaft 110 may, while rotating, receive cooling medium at an interior thereof and circulate the cooling medium therein. The rotor shaft 110 may comprise interior channels/grooves that are arranged to circulate the cooling medium from one end of the shaft to another end of the shaft 110. Further, as the cooling medium reaches a part of the shaft 110 associated with the outlet openings 110a it will, experience centrifugal force, and be ejected therefrom. Further, the cooling medium will retain angular momentum gained from the rotating shaft and move circularly/spirally within the inner circumferential surface 2a until reaching the looped portion via the apertures 3. Accordingly, as illustrated in Figures 1 and 2, the apertures 3 may be formed by angled slats/louvers 5 conforming with a pre-determined circular flow trajectory of the cooling medium so that the cooling medium flows via the top surface 5a of the louver 5 into the apertures 3.

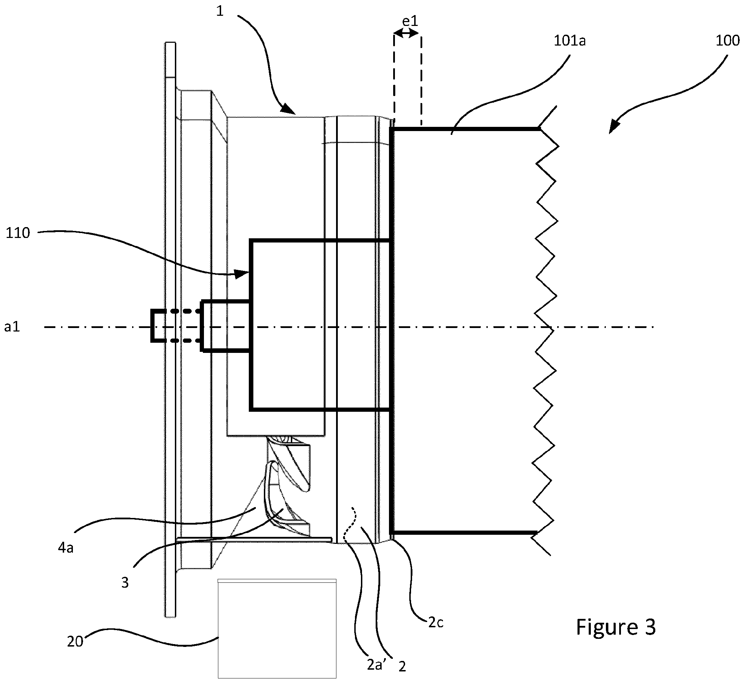

Figure 3 illustrates a side view of a part of a rotor 100 in accordance with some aspects of the present disclosure. Figure 3 illustrates that a rotor shaft 110 of the rotor is enclosed by the main body 2 of the device 1. Nonetheless, the device 1 is stationary relative to the rotor 100. Figure 3 further illustrates that the first circular portion 2a' is tapered towards said outer periphery 2c of said inner circumferential surface 2a. Accordingly, a diameter thereof is decreasing towards its outer periphery 2c so to more efficiently capture any fluid being released from the rotor shaft 110. Figure 3 further illustrates that the device 1 encircles a part of the rotor 100. The device 1 may be formed by e.g. a metal or a substrate material. The device may comprise different materials, e.g. combination of metal and composite material.

Figure 3 further illustrates that the outlet opening 4a of the cooling medium collector device 1 is in vicinity of a reservoir 20 arranged to receive said cooling medium for re-using said cooling medium. Accordingly, the cooling medium collector device 1 may be connected to, or positioned relative to the reservoir 20 so that any cooling medium being ejected from the outlet 4a is captured by the reservoir 20. The reservoir 20 may comprise an inlet. The inlet of the reservoir 20 may be a pump inlet. Accordingly, the reservoir 20 may be integral with or connected to a pump which is arranged to re-use the received cooling medium.

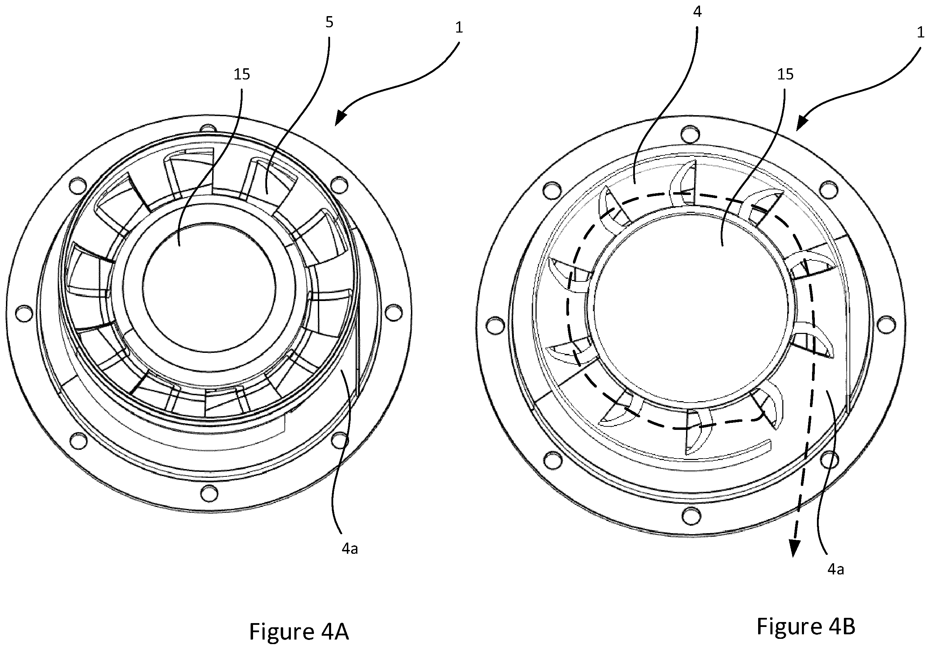

Figure 4A illustrates a top objective view of the device 1 and Figure 4B illustrates a cross-sectional view of the device 1 of Figure 4A. Accordingly, in Figure 4B depicts a top cross-section of Figure 4A, wherein a top of the device 1 of Figure 4A is sliced.

Figure 4B illustrates, with a dashed arrow, that the looped portion 4 may be dimensioned to transfer said cooling medium along at least a semi-circular path, said semi-circular path being arranged to at least partially encircle a rotor shaft of said rotor, provided that the rotor shaft protrudes into the opening 15. As illustrated in Figure 4B the looped portion 4 may define a space which the cooling medium is arranged to flow through. The looped portion 4 may as illustrated in Figure 4B have a semi-circular shape.

The semi-circular path may as illustrated in Figure 4B form an arc angle of at least 300 degrees. In other aspects, the looped portion 4 may comprise a plane spiral path or a spiral path formed therein. The semi-circular and/or spiral path reduces the foam generated in the cooling medium.

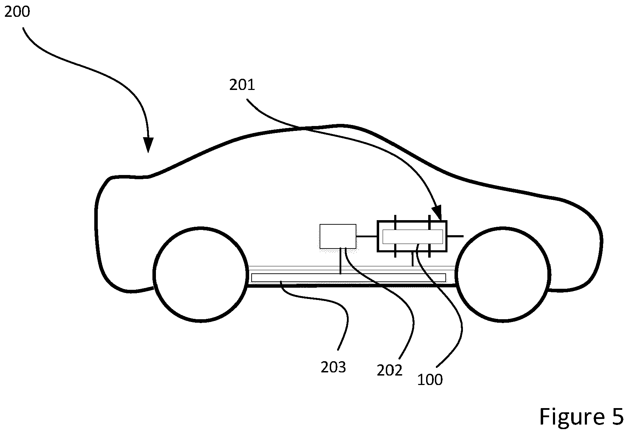

Figure 5 schematically illustrates an electric vehicle 200 comprising an electric motor 201 according to any aspect herein. The electric motor 201 comprises a rotor 100 according to any aspect of the present disclosure such as the rotor 100 of Figure 2. The electric vehicle 200 may as appreciated by a skilled person in the art further comprise a battery pack 203, a battery management and control system 202 and other suitable systems/devices. The battery pack 203 may comprise a plurality of battery cells, the battery cells may be clustered into individual battery modules. The electric motor 201 comprise a stator (not shown) accommodating the rotor 100. The stator may comprise a winding distributed about an inner circumference thereof.

## Claims

1. A cooling medium collector device (1) for a rotor of an electric motor comprising:
- an annular main body (2) extending along an axial axis (a1), the main body (2) having an inner circumferential surface (2a) arranged to be associated with an end part of a rotor;
wherein the inner circumferential surface (2a) comprises a plurality of circularly distributed receiving apertures (3) arranged to receive cooling medium ejected from said rotor;
wherein each of said plurality of receiving apertures (3) is in fluid flow communication with a looped portion (4) of said cooling medium collector device (1), the looped portion (4) being arranged to receive said ejected cooling medium via said plurality of receiving apertures (3);
wherein the looped portion (4) comprises an outlet opening (4a) for releasing said ejected cooling medium.

2. The cooling medium collector device (1) according to any one of the claims 1 or 2,
wherein each receiving aperture (3) is defined by a louver (5) formed in said circumferential surface (2a).

3. The cooling medium collector device (1) according to claim 2, wherein each louver (5) is angled relative to the circumferential surface (2a).

4. The cooling medium collector device (1) according to any one of the claims 2 or 3,
wherein each louver is oriented to conform with a pre-determined flow route of said cooling medium.

5. The cooling medium collector (1) device according to any one of the preceding claims, wherein the cooling medium collector device (1) is arranged to be attached to, or be integral with a static portion of said electric motor, the static portion preferably being an electric motor housing.

6. The cooling medium collector device (1) according to any one of the preceding claims, wherein said circumferential surface (2a) comprises a first circular portion (2a') arranged to overlap an outer circumference of said rotor, the first circular portion (2a') extending to a second circular portion (2a") comprising said receiving apertures (3), the second circular portion (2a") being associated with an inner periphery (2b) of said inner circumferential surface (2a) and said first circular portion (2a') being associated with an outer periphery (2c) of said inner circumferential surface (2a).

7. The cooling medium collector device (1) according to claims 6, wherein the first circular portion (2a') is tapered towards said outer periphery (2c) of said inner circumferential surface (2a).

8. The cooling medium collector device (1) according to any one of the preceding claims, wherein the looped portion (4) is dimensioned to transfer said cooling medium along at least a semi-circular path, said semi-circular path being arranged to at least partially encircle a rotor shaft of said rotor.

9. The cooling medium collector device (1) according to claim 8, wherein said semi-circular path forms an angle of at least 300 degrees, preferably at least 315 degrees, most preferably at least 330 degrees.

10. The cooling medium collector device (1) according to any one of the preceding claims, wherein the outlet opening (4) is in vicinity of a reservoir arranged to receive said cooling medium for re-using said cooling medium.

11. The cooling medium collector device (1) according to any one of the preceding claims, wherein a main body opening (15) of said annular main body (2) is arranged to accommodate a rotor shaft of the rotor.

12. The cooling medium collector device (1) according to any one of the preceding claims, wherein the plurality of receiving apertures (3) is at least five receiving apertures, or at least 8 receiving apertures, wherein the plurality of receiving apertures (3) are distributed about said inner circumferential surface (2a).

13. A rotor (100) for an electric motor (201), the rotor (100) comprising the cooling medium collector device (1) according to any one of the claims 1-11, wherein the cooling medium collector device (1) is associated with an end part (e1) of said rotor (100).

14. The rotor (100) according to claim 12, wherein the rotor comprises a hollow rotor shaft (110), the cooling medium being ejected from said rotor via an interior of said hollow rotor shaft (110) during an active state of said hollow rotor shaft, wherein the inner circumferential surface (2a) is dimensioned to circulate said cooling medium at least one turn about said rotor shaft (110) prior to that said ejected cooling medium is transferred to the looped portion (4).

15. An electric motor (201) for an electric vehicle (200), the electric motor (201) comprising:
- a stator
- the rotor (100) according to claim 13
wherein the stator accommodates the rotor (100).
